# EUROPÄISCHE PATENTANMELDUNG

(11) **EP 3 473 565 A1**
(43) Veröffentlichungstag der Anmeldung: **24.04.2019**
(21) Anmeldenummer: 18200944.9
(22) Anmeldetag: 17.10.2018
(51) Int. Cl.: B65G 47/91, B25J 15/06, B25J 9/14

(54) **VAKUUMSAUGNAPF MIT AKTIV VARIIERBARER LÄNGE**

(30) Priorität: 19.10.2017 DE 102017124472
(71) Anmelder: SMC Deutschland GmbH, 63329 Egelsbach (DE)
(72) Erfinder: Kallis, Jürgen, 75417 Mühlacker (DE); Tewes, Steffen, 75395 Ostelsheim (DE)
(74) Vertreter: Keil & Schaafhausen Patent- und Rechtsanwälte PartGmbB

(57) **Zusammenfassung**

Die vorliegende Erfindung betrifft einen Vakuumsaugnapf (40, 40') mit einem Faltenbalg (1) und einem an dem Faltenbalg (1) angebrachten Saugfuß (2) mit einer Saugöffnung (3), der entlang einer Längsrichtung (L) ein Fußende (4) des Vakuumsaugrüssels (40, 40') bildet, und einem Vakuumanschluss (5), der in Fluidverbindung mit der Saugöffnung (3) steht. Um den Saugfuß (3) in einfacher und zuverlässiger Weise ein- und ausfahren zu können und dennoch einen kompakten und leichten Vakuumsaugnapf (40', 40) zu erreichen, weist der Faltenbalg (1) eine Faltenbalgkammer (6) auf, wobei eine Länge (L1) des Faltenbalgs (1) in der Längsrichtung (L) durch Änderung eines Drucks in der Faltenbalgkammer (6) variierbar ist.

## Beschreibung

Die Erfindung betrifft einen Vakuumsaugnapf mit einem Faltenbalg und einem an dem Faltenbalg angebrachten Saugfuß mit einer Saugöffnung, der entlang einer Längsrichtung ein Fußende des Vakuumsaugnapfs bildet. Die Erfindung betrifft ferner eine Vakuumsauganlage mit mindestens einem solchen Vakuumsaugnapf und ein Verfahren zum Betrieb eines Vakuumsaugnapfs und/oder einer Vakuumsauganlage.

Vakuumsauger werden dazu verwendet, Werkstücke durch Ansaugen zu greifen, zu halten und zu bewegen, beispielsweise in industriellen Produktionsprozessen. Dazu werden Vakuumsauger unter anderem an Roboterarmen von Fabrikationsanlagen zum Werkstückhandling eingesetzt.

Bisher bekannte Vakuumsauger von Vakuumsauganlagen bestehen aus mehreren Einzelteilen oder Halbzeugen. Sie weisen in der Regel eine mechanische Führung zur Höhenverstellung des Saugfußes auf, welche einen Pneumatikzylinder mit einer Kolbenstange umfasst. Für die Kolbenstange ist eine Vakuumdurchführung notwendig. Des Weiteren weisen bekannte Vakuumsauger einen separaten Vakuumsaugnapf in Flach- oder Balgform mit einem Saugfuß zur Aufnahme von Werkstücken auf. Solche Vakuumsauger sind zum aktiven Aus- und Einfahren des Saugfußes geeignet. So kann der Saugfuß an Werkstücke herangefahren und aufgesetzt werden oder von diesen weggezogen werden.

Alternativ werden Federbefestigungen für die Saugfüße benutzt. Auch in solchen Fällen bedarf es einer mechanischen Führung mit einer Vakuumdurchführung. Bei solchen Ausführungen können die Saugfüße durch einen Federdruck ausgefahren und durch einen Gegendruck eingefahren werden. Dies hat den Nachteil, dass die Saugfüße nicht aktiv ohne einen zusätzlichen Gegendruck eingefahren werden können.

Die Druckschrift DE 195 44 490 A1 lehrt einen Platinenlader mit mehreren einzelnen Saugern. Jeder Sauger weist ein starr mit einem Längsträger verbundenes Außenrohr auf, in dem ein Saugrohr entlang seiner Längsrichtung verschiebbar, das heißt vertikal verschiebbar, gelagert ist. Ein einzelner Sauger kann von einer Aktivstellung in eine Passivstellung überführt werden, indem eine Schraubenfeder das Saugrohr und einen daran angeordneten Steuerschieber nach oben drückt. Eine Überführung des Saugers von seiner Passivstellung in seine Aktivstellung erfolgt, indem eine Platte, die fest mit der Oberseite des Steuerschiebers verschraubt ist, nach unten gedrückt und arretiert wird.

In der Druckschrift EP 1 541 255 A1 ist ein Greifmittel mit einem Greifmagneten für das Aufgreifen und Anheben einer Platte offenbart. Das Greifmittel weist ferner einen Sauggreifer mit einer Unterdruckkammer auf, die über einen Vakuumeinlass mit einem Durchlass verbunden ist, welcher mit einer in zwei Richtungen arbeitenden Pumpe verbunden ist. Als Mittel zum Freigeben ist ein aufblasbarer Balg vorgesehen, der den Greifmagneten partiell umgibt und mit ihm verbunden ist. Während Luft in den Balg geblasen wird, schwillt dieser an, woraufhin er die Platte von der Vakuumkammer fortstößt. Gleichzeitig drückt der Balg den Greifmagneten von der Platte weg.

Die bekannten Vakuumsauger beanspruchen aufgrund ihres komplizierten Aufbaus relativ viel Bauraum. Das liegt an den vielen Einzelteilen der mechanischen Führung, beispielsweise den Kolben, der Kolbenstangen und den Vakuumdurchführungen. Da die eigentlichen Vakuumsaugnäpfe bzw. Saugfüße separate Bauteile sind, müssen Befestigungsnippel oder Schraubengewinde für deren Befestigung an der mechanischen Führung vorgesehen sein. Aufgrund ihrer Größe sind die bekannten Vakuumsauger unter Umständen nicht anwendbar, wenn nur wenig Raum zur Verfügung steht.

Die mechanischen Führungen sind längs und quer zu einer Ein- und Ausfahrrichtung belastet und verschleißanfällig. Daher kann es zu Ausfällen kommen. Die Wartung und die Reparatur der Vakuumsauger sind zeit- und kostenintensiv.

Aufgrund der vielen Bauteile sind die bekannten Vakuumsauger außerdem relativ schwer. Das Gewicht verringert die zulässige Geschwindigkeit, mit der sich ein Roboterarm bewegen darf, an dem ein solcher Vakuumsauger angeordnet ist. Außerdem muss das hohe Gewicht des Vakuumsaugers immer mitbeschleunigt werden, wenn sich der Roboterarm bewegt. Insofern wird durch das hohe Gewicht der bekannten Vakuumsauger die Energieeffizienz des Werkstückhandlings beeinträchtigt.

Die Aufgabe der Erfindung besteht darin, einen einfacher aufgebauten und kompakten Vakuumsaugnapf mit aktiv ein- und ausfahrbarem Saugfuß zu schaffen.

Die obige Aufgabe wird gelöst durch einen Vakuumsaugnapf mit den Merkmalen des Anspruchs 1.

Der erfindungsgemäße Vakuumsaugnapf weist einen Faltenbalg auf, einen an dem Faltenbalg angebrachten Saugfuß mit einer Saugöffnung, der entlang einer Längsrichtung ein Fußende des Vakuumsaugnapfs bildet, und einen Vakuumanschluss, der in Fluidverbindung mit der Saugöffnung steht, wobei der Faltenbalg eine Faltenbalgkammer aufweist und wobei eine Länge des Faltenbalgs in der Längsrichtung durch Änderung eines Drucks in der Faltenbalgkammer variierbar ist.

Der Saugfuß ist derart eingerichtet, dass durch Aufsetzen des Saugfußes auf ein Werkstück die Saugöffnung zumindest im Wesentlichen dichtend von einem Umgebungsdruck abgetrennt wird. Geeignete Saugfüße sind aus dem Stand der Technik bekannt und brauchen hier nicht genauer beschrieben zu werden. Durch Aufsetzen des Saugfußes auf das Werkstück sowie das Anlegen eines Unterdrucks an den Vakuumanschluss (im Folgenden auch Ansaugdruck genannt) und damit an die Saugöffnung kann das Werkstück an dem Saugfuß gehalten werden. Ein Unterdruck ist ein Druck, der geringer ist als ein Umgebungsdruck. Der Umgebungsdruck ist dabei der Druck, der von außen auf den Vakuumsaugnapf und das Werkstück wirkt. Dabei kann es sich insbesondere um den Atmosphärendruck handeln.

Der an die Saugöffnung angelegte Ansaugdruck wirkt im Bereich des Saugfußes auf eine dem Saugfuß zugewandte Seite des Werkstücks. Insbesondere auf eine dem Saugfuß abgewandte Seite des Werkstücks wirkt der Umgebungsdruck. Da der Umgebungsdruck höher ist als der Ansaugdruck, wird das Werkstück aufgrund dieser Druckdifferenz von dem Umgebungsdruck an den Saugfuß gedrückt. Bei einem ausreichend starken Ansaugdruck genügt die resultierende Kraft dazu, das Werkstück an dem Saugfuß festzuhalten. Im Ergebnis wird das Werkstück durch den Ansaugdruck an den Saugfuß "angesaugt". Wenn der Ansaugdruck an den Umgebungsdruck angeglichen wird, dann wird das Werkstück nicht länger an dem Saugfuß festgehalten. So kann das Werkstück losgelassen, abgelegt und/oder abgeworfen werden. Um das Loslassen, Ablegen und/oder Abwerfen des Werkstücks zu vereinfachen und/oder zu beschleunigen, kann optional ein Überdruck (ein Druck, der größer als der Umgebungsdruck ist) an die Saugöffnung angelegt werden.

Mithilfe des erfindungsgemäßen Vakuumsaugnapfs können Werkstücke aufgenommen, gehalten, bewegt, manipuliert, transportiert und/oder abgelegt werden.

Als Faltenbalgkammer im Sinne dieser Anmeldung wird eine in den Faltenbalg integrierte Kammer bezeichnet, die von der Saugöffnung separiert ist. Das bedeutet, dass die Faltenbalgkammer von dem Vakuumanschluss und der Saugöffnung abgetrennt ist. Innerhalb des Vakuumsaugnapfs besteht keine Fluidverbindung zwischen dem Vakuumanschluss oder der Saugöffnung einerseits und der Faltenbalgkammer andererseits. Dadurch kann der Druck in der Faltenbalgkammer bei bestimmungsgemäßer Verwendung des Vakuumsaugnapfs unabhängig von dem Ansaugdruck eingestellt und/oder geändert werden. Dass die Vakuumöffnung und die Saugöffnung mit der Faltenbalgkammer über die Umgebung miteinander in Verbindung stehen können, sofern der Vakuumsaugnapf nicht bestimmungsgemäß verwendet wird, ist unschädlich für diese Definition.

Durch Änderung des Drucks in der Faltenbalgkammer ist die Länge des Faltenbalgs entlang der Längsrichtung variierbar. Entsprechend ist auch die Länge des gesamten Vakuumsaugnapfs durch Änderung des Drucks in der Faltenbalgkammer variierbar. Das heißt, ein Abstand zwischen dem Fußende und einem in der Längsrichtung entgegen liegenden Kopfende des Vakuumsaugnapfs ist variierbar. Das dem Fußende in der Längsrichtung abgewandte Ende wird der Einfachheit halber auch als "Kopfende" bezeichnet, ohne dass dieser Begriff sonstige technische Merkmale oder Besonderheiten impliziert. Mit anderen Worten ist bei der vorliegenden Erfindung der Saugfuß durch Änderung des Drucks in der Faltenbalgkammer ein- und ausfahrbar. Dies wird im Folgenden anhand eines Beispiels beschrieben:
Angenommen, der Faltenbalg befindet sich in einer Grundstellung, wenn in der Faltenbalgkammer der Umgebungsdruck herrscht. Der Faltenbalg weist in der Grundstellung eine Grundlänge entlang der Längsrichtung auf. Diese Grundlänge kann insbesondere durch seine Form vorgegeben sein. Wenn die Faltenbalgkammer mit einem Unterdruck beaufschlagt wird, der geringer ist als der Umgebungsdruck, dann wird die Faltenbalgkammer durch den Umgebungsdruck in der Längsrichtung zusammengedrückt. Ausgehend von der Grundlänge verkürzt sich die Länge des Faltenbalgs entsprechend. Das bedeutet, dass ein Abstand des Saugfußes von dem Kopfende kleiner wird. Der Saugfuß wird eingefahren. Er vollführt einen Hub entlang der Längsrichtung. Umgekehrt kann der Saugfuß durch Änderung des Drucks in der Faltenbalgkammer auf den Umgebungsdruck oder einen Überdruck wieder ausgefahren werden.

Wenn der Vakuumsaugnapf beispielsweise mit dem Kopfende und/oder nahe bei dem Kopfende an einer Halterung einer Vakuumsauganlage angebracht ist, kann durch Änderung des Drucks in der Faltenbalgkammer eine Position des Saugfußes relativ zu dem Kopfende und somit relativ zu der Halterung eingestellt werden. Der erfindungsgemäße Vakuumsaugnapf erlaubt es, alleine durch Änderung des Drucks in der Faltenbalgkammer den Saugfuß an ein Werkstück heranzufahren oder von einem Werkstück wegzubewegen. Wenn das Werkstück an dem Vakuumsaugnapf gehalten wird, kann das Werkstück allein durch Änderung des Drucks in der Faltenbalgkammer zusammen mit dem Saugfuß entlang der Längsrichtung bewegt werden. Da der Druck in der Faltenbalgkammer bei bestimmungsgemäßer Verwendung des Vakuumsaugnapfs unabhängig von dem Ansaugdruck geändert werden kann, erfolgt die Verstellung der Länge des Faltenbalgs durch Änderung des Drucks in der Faltenbalgkammer unabhängig von dem Ansaugdruck und insbesondere unabhängig davon, ob gerade ein Werkstück an dem Saugfuß gehalten wird oder nicht. Bei einem Mehrachshandling kann mit dem Vakuumsaugnapf folglich eine Bewegung entlang einer Bewegungsachse (beispielsweise in horizontaler oder vertikaler Richtung) realisiert werden.

Die Faltenbalgkammer kann sich in dem Faltenbalg in der Längsrichtung gesehen über den gesamten Faltenbalg oder über einen Teil des Faltenbalgs erstrecken.

Die Funktion des Faltenbalgs und der Faltenbalgkammer ist weitgehend unabhängig von der Form des Faltenbalgs und des Saugfußes. Der Saugfuß und/oder der Faltenbalg können quer zur Längsrichtung beispielsweise rund, eckig, oder oval geformt sein.

Insbesondere kann der Vakuumsaugnapf eine zumindest im Wesentlichen rotationssymmetrische Grundform aufweist. Dadurch ist der Vakuumsaugnapf besonders einfach herstellbar und für Lasteinflüsse aus allen Richtungen quer zu der Längsrichtung gleich belastbar.

Der Vakuumsaugnapf kann beispielsweise aus einem der folgenden Materialien oder einer beliebigen Kombination der folgenden Materialien hergestellt sein: Nitrilkautschuk, Silikon und/oder Fluorkautschuk. Mit diesen Materialien ist die notwendige Form des Vakuumsaugnapfs produktionstechnisch realisierbar. Des Weiteren weisen sie die notwendigen elastischen Eigenschaften auf, um einen funktionierenden Faltenbalg mit einer Faltenbalgkammer im Sinne der Erfindung auszubilden. Schließlich haben sich diese Materialien als ausreichend beständig und haltbar erwiesen. Alternativ oder zusätzlich können auch andere Werkstoffe verwendet werden.

Insbesondere kann der Saugfuß aus einem elastischen Material gebildet sein. Damit passt sich der Saugfuß an Unebenheiten der Oberflächen von Werkstücken beim Ansaugen dieser Werkstücke an. So dichtet der Saugfuß für den Aufbau und die Aufrechterhaltung des Ansaugdrucks sicher an dem Werkstück ab.

Mit dem vorgeschlagenen Vakuumsaugnapf bedarf es für das Ein- und Ausfahren des Saugfußes keiner zusätzlichen mechanischen Führung. Beispielsweise sind keine weiteren mechanischen Bauteile wie Pneumatikzylinder, Kolbenstangen oder Federelemente nötig. Insbesondere kann auf Vakuumdichtungen für eine mechanische Führung (wie einer Kolbenstange) verzichtet werden. Solche Vakuumdichtungen werden im Betrieb üblicherweise stark belastet und unterliegen einem hohen Verschleiß. Das kann die Zuverlässigkeit und Betriebssicherheit konventionelle Vakuumsauger beeinträchtigen.

Eine Ansteuervorrichtung zur Erzeugung des Ansaugdruckes und/oder zur Änderung des Drucks in der Faltenbalgkammer kann außerhalb des Vakuumsaugnapfs und von dessen Einsatzort entfernt vorgesehen sein. Entsprechend ist die Ansteuervorrichtung selbst nicht den gegebenenfalls widrigen Bedingungen am Einsatzort des Vakuumsaugnapfs ausgesetzt. Der Vakuumsaugnapf hingegen ist besonders einfach, platzsparend und leicht sowie besonders schnell und kostengünstig herstellbar. Insbesondere erfordert der vorgeschlagene Vakuumsaugnapf besonders wenige Einzelteile.

Vorbekannte Vakuumsauger sind aufgrund ihres Aufbaus um bis zu 80 % größer als der vorgeschlagene Vakuumsaugnapf. Folglich können Anlagen zur Manipulation von Werkstücken mit dem vorgeschlagenen Vakuumsaugnapf deutlich kompakter ausfallen. Das erlaubt den Einsatz auch in beengten räumlichen Verhältnissen und/oder eine Erhöhung der Produktionsdichte.

Vorbekannte Vakuumsauger weisen außerdem ein bis zu 80 % höheres Gewicht auf als der vorgeschlagene Vakuumsaugnapf. Wenn ein Vakuumsaugnapf oder mehrere Vakuumsaugnäpfe an eine Halterung einer Vakuumsauganlage angeschlossen ist bzw. sind, wird das beim Verfahren der Halterung zu bewegende Gewicht reduziert. Dadurch kann die Halterung schneller und/oder energieeffizienter bewegt werden. Außerdem ist aufgrund des geringeren Gewichts des vorgeschlagenen Vakuumsaugnapfs eine Belastung für eine Halterung, insbesondere für einen Roboterarm, an welchem der Vakuumsaugnapf angeordnet ist und durch den er bewegt wird, reduziert.

Der vorgeschlagene Vakuumsaugnapf weist einen besonders geringen Verschleiß auf. Das liegt insbesondere daran, dass auf zusätzliche mechanische Führungen verzichtet werden kann.

Der Faltenbalg und die Faltenbalgkammer haben elastische Eigenschaften. Bei dem vorgeschlagenen Vakuumsaugnapf kann aufgrund dieser elastischen Eigenschaften eine gewisse Neigung des Saugfußes gegenüber der Längsrichtung zugelassen sein. Alternativ und/oder zusätzlich können die elastischen Eigenschaften des Faltenbalgs, der Faltenbalgkammer und eines in der Faltenbalgkammer befindlichen Fluids (insbesondere, wenn es sich um ein kompressibles Fluid handelt) zur Dämpfung von Schwingungen und Bewegungen zwischen Werkstück und der Halterung genutzt werden.

Die vorliegende Erfindung kann Anwendung finden bei jeder Art von Vakuumhandlings und insbesondere in automatisierten Fertigungsstraßen.

In einer vorteilhaften Ausführung der Erfindung ist der Vakuumanschluss an dem Kopfende angeordnet. Damit kann die Ansteuervorrichtung zur Erzeugung des Ansaugdrucks besonders einfach mit dem Vakuumanschluss verbunden werden, beispielsweise durch einen Vakuumschlauch. Durch die genannte Anordnung des Vakuumanschlusses besteht keine Gefahr, dass der Vakuumanschluss, ein daran angeschlossener Vakuumschlauch oder eine direkt an dem Vakuumanschluss angeschlossene Ansteuervorrichtung bei der Aufnahme eines Werkstückes an dem Saugfuß hinderlich sind.

Bevorzugt weist der Vakuumsaugnapf eine Anschlussöffnung auf, die in Fluidverbindung mit der Faltenbalgkammer steht und durch welche die Faltenbalgkammer mit Überdruck und/oder Unterdruck beaufschlagbar ist.

Es versteht sich von selbst, dass die Faltenbalgkammer nicht gleichzeitig mit einem Überdruck und einem Unterdruck beaufschlagt werden soll. Es kann aber beispielsweise vorgesehen sein, dass die Länge des Faltenbalgs einerseits durch Anlegen eines Unterdrucks in der Faltenbalgkammer verkürzbar ist und andererseits durch Anlegen eines Überdrucks in der Faltenbalgkammer verlängerbar ist.

Insbesondere kann die Länge des Faltenbalgs in der Längsrichtung durch Zuführen von Fluid in die Faltenbalgkammer und/oder die Entnahme von Fluid aus der Faltenbalgkammer durch die Anschlussöffnung variierbar sein. Die Faltenbalgkammer ist also zur Aufnahme des Fluids ausgestaltet und das Fluid kann über die Anschlussöffnung zugeführt oder entnommen werden.

Durch das Zuführen und/oder die Entnahme von Fluid kann die Länge besonders schnell, genau und reproduzierbar geändert werden. Der Vakuumsaugnapf selbst braucht keine Bauteile zur Regelung der Zuführung und/oder der Entnahme des Fluids aufzuweisen. Solche Bauteile können empfindlich, schwer und/oder teuer sein. Folglich kann der Vakuumsaugnapf besonders einfach ausgeführt sein, was seine Zuverlässigkeit gerade unter schwierigen Einsatzbedingungen erhöht.

Überaus bevorzugt ist die Länge des Faltenbalgs in der Längsrichtung durch Aufblasen und/oder Evakuierung der Faltenbalgkammer variierbar. Als Fluid können beispielsweise Luft oder Stickstoff verwendet werden. Solche Gase sind leicht verfügbar und erlauben schnelle Schaltvorgänge.

Besonders bevorzugt ist die Anschlussöffnung an dem Kopfende des Vakuumsaugnapfs, welches dem Fußende abgewandt ist, vorgesehen.

Dann kann die Faltenbalgkammer besonders einfach mit einer externen Ansteuervorrichtung verbunden sein, beispielsweise durch eine Fluidverbindung, insbesondere durch einen Druckschlauch. Durch die genannte Anordnung der Anschlussöffnung besteht keine Gefahr, dass die Anschlussöffnung selbst, der daran angeschlossene Druckschlauch oder eine direkt an der Anschlussöffnung angeschlossene Ansteuervorrichtung bei der Aufnahme eines Werkstückes an dem Saugfuß hinderlich sind.

In einer weiteren Ausprägung der Erfindung ist der Vakuumsaugnapf einstückig ausgeführt. Das bedeutet, dass der Vakuumsaugnapf insgesamt aus nur einem zusammenhängenden, integralen Bauteil besteht.

Dadurch lässt sich der Vakuumsaugnapf einfach und schnell als Ganzes austauschen, wenn er beschädigt und/oder verschlissen ist. Ein zeitaufwendiges Zerlegen zum Ausbauen besonderer Einzelteile ist nicht erforderlich. Damit können Stillstandzeiten von Anlagen, in denen der Vakuumsaugnapf genutzt wird, vermieden oder verringert werden. Des Weiteren muss nur ein einziger Typ von Ersatzteilen vorgehalten werden. Schließlich gibt es keine Gelenke oder Verbindungen, die besonders anfällig für Schutz, Verschleiß und Beschädigungen sein könnten.

In einer weiteren Ausführungsform der Erfindung ist der Vakuumsaugnapf durch Spritzguss hergestellt. Auf diese Weise ist der Vakuumsaugnapf besonders kostengünstig und schnell sowie in großen Mengen fertigbar. Insbesondere werden Kosten, Aufwand und Zeit zur Fertigung vieler Einzelteile sowie eine komplizierte Endmontage vermieden.

In einer weiteren, bevorzugten Ausführungsform der Erfindung nimmt der Vakuumsaugnapf eine Grundstellung ein, wenn die Faltenbalgkammer nicht mit einem Unterdruck beaufschlagt wird, wobei die Länge des Faltenbalgs in der Längsrichtung in der Grundstellung maximal ist.

Dass die Faltenbalgkammer nicht mit einem Unterdruck beaufschlagt ist, bedeutet, dass in ihr der Umgebungsdruck oder ein Überdruck herrscht. Die maximale Länge des Faltenbalgs in der Grundstellung ist bei dieser Ausführungsform durch die Formung des Faltenbalgs bestimmt. Auch wenn die Faltenbalgkammer mit einem Überdruck (einem Druck höher als der Umgebungsdruck) beaufschlagt wird, wird die Länge des Faltenbalgs bei dieser Ausführungsform nicht größer oder zumindest nicht wesentlich größer, als wenn in der Faltenbalgkammer der Umgebungsdruck herrscht.

In einer besonders vorteilhaften Ausführungsform der Erfindung nimmt der Vakuumsaugnapf eine Parkstellung ein, wenn die Faltenbalgkammer mit einem Unterdruck beaufschlagt ist, wobei die Länge des Faltenbalgs in der Längsrichtung in der Parkstellung kleiner ist als die Länge des Faltenbalgs in der Längsrichtung in der Grundstellung.

Überaus bevorzugt ist, dass entlang der Längsrichtung des Faltenbalgs die Länge, in welcher die Faltenbalgkammer vorgesehen ist, in der Parkstellung minimal ist.

In einer überaus bevorzugten Ausführungsform nimmt der Vakuumsaugnapf die Parkstellung spätestens dann ein, wenn die Faltenbalgkammer mit einem Unterdruck von mindestens 0,3 bar beaufschlagt wird. Das bedeutet, dass der Druck in der Faltenbalgkammer um mindestens 0,3 bar kleiner ist als der Umgebungsdruck. Überaus bevorzugt nimmt der Vakuumsaugnapf die Parkstellung spätestens dann ein, wenn die Faltenbalgkammer mit einem Unterdruck von mindestens 0,4 bar beaufschlagt wird. Bevorzugt genügt es, dass die Faltenbalgkammer mit einem Unterdruck von weniger als 0,6 bar beaufschlagt wird, damit der Vakuumsaugnapf die Parkstellung einnimmt. Ein Unterdruck von 0,5 bar kann sicher und ausreichend schnell erzeugt werden.

Bevorzugt umschließt der Faltenbalg quer zu der Längsrichtung einen Vakuumkanal, welcher sich zumindest im Wesentlichen entlang der Längsrichtung erstreckt und über welchen die Saugöffnung und der Vakuumanschluss in Fluidverbindung stehen, wobei die Saugöffnung in der Längsrichtung ein fußseitiges Ende des Vakuumkanals bildet. Dies erlaubt eine kompakte und einfache Realisierung des Vakuumsaugnapfs.

Überaus bevorzugt bildet der Vakuumanschluss ein der Saugöffnung gegenüberliegendes, kopfseitiges Ende des Vakuumkanals. Dann braucht eine Fluidströmung durch den Vakuumkanal, die kurz vor Aufbau des Ansaugdrucks entstehen kann, nicht umgelenkt zu werden. Die Effizienz des Vakuumsaugnapfs ist entsprechend besonders hoch.

In einer Weiterbildung der Erfindung lässt sich eine Länge des Vakuumsaugnapfs in der Längsrichtung durch eine Beaufschlagung des Vakuumkanals mit einem Ansaugdruck verkürzen.

Bei dieser Ausführungsform hängt eine gesamte Länge des Vakuumsaugnapfs in der Längsrichtung zusätzlich davon ab, ob in dem Vakuumkanal ein Ansaugdruck herrscht. Ein solcher Ansaugdruck kann in dem Vakuumkanal dann aufrechterhalten werden, wenn die Saugöffnung von dem Umgebungsdruck zumindest im Wesentlichen abgedichtet ist. Das ist insbesondere dann der Fall, wenn der Saugfuß zumindest im Wesentlichen dichtend auf ein Werkstück aufgesetzt ist. Die Länge des Vakuumsaugnapfs setzt sich zumindest aus der Länge des Faltenbalgs in der Längsrichtung und aus einer Länge des Saugfußes in der Längsrichtung zusammen. Während durch Änderung des Drucks in der Faltenbalgkammer die Länge des Faltenbalgs in der Längsrichtung (und damit auch die Länge des Vakuumsaugnapfs insgesamt) verändert wird, führt die Beaufschlagung des Vakuumkanals mit einem Ansaugdruck zu einer Verkürzung der Länge des Faltenbalgs und/oder des Saugfußes. Dies wird an folgendem Beispiel klar: Da der Saugfuß wie zuvor beschrieben aus elastischem Material gebildet sein kann, kann er sich bei einer solchen Ausführungsform in Längsrichtung etwas verkürzen, wenn ein Werkstück angesaugt und auf den Saugfuß gepresst wird.

In einer besonders bevorzugten Ausführungsform der Erfindung weist der Faltenbalg entlang der Längsrichtung mindestens einen kammerfreien Teil mit mindestens einer Falte auf. Überaus bevorzugt ist der mindestens eine kammerfreie Teil mit der mindestens einen Falte zwischen dem Teil des Faltenbalgs mit der Faltenbalgkammer und dem Saugfuß vorgesehen.

Wie zuvor erwähnt wurde, kann sich die Faltenbalgkammer in der Längsrichtung nur über einen Teil des Faltenbalgs erstrecken. Mit anderen Worten ist in diesem Fall entlang der Längsrichtung mindestens ein kammerfreier Teil des Faltenbalgs vorgesehen. "Kammerfrei" bedeutet, dass in dem kammerfreien Teil keine Faltenbalgkammer vorgesehen ist. Eine Länge des kammerfreien Teils entlang der Längsrichtung wird daher auch nicht durch Änderung des Drucks in der Faltenbalgkammer beeinflusst. Sofern Falten des Faltenbalgs in dem kammerfreien Teil vorgesehen sind, können diese Falten durch Beaufschlagung des Vakuumkanals mit dem Ansaugdruck durch den Umgebungsdruck zusammengedrückt werden. Dadurch verkürzt sich die Länge des Faltenbalgs gegenüber einem ansonsten gleichen Zustand, bei welchem der Vakuumkanal nicht mit dem Ansaugdruck beaufschlagt ist. Beispielsweise kann deshalb ein Werkstück, auf dem der Saugfuß zumindest im Wesentlichen dichtend aufgesetzt wird, allein durch Anlegen des Ansaugdrucks und die resultierende Verkürzung des Vakuumsaugnapfs angehoben werden.

In einer weiteren vorteilhaften Ausführungsform der Erfindung ist ein Vakuumfilter zwischen dem Vakuumanschluss und der Saugöffnung vorgesehen.

Der Vakuumfilter sorgt dafür, dass kein Schmutz bis zu der Anschlussöffnung gelangt und in eine gegebenenfalls daran angeschlossene Ansteuervorrichtung eingesaugt wird. Das erhöht die Betriebssicherheit.

In einer besonders vorteilhaften Weiterbildung der Erfindung ist der Vakuumfilter in dem Vakuumkanal vorgesehen, der die Fluidverbindung zwischen der Saugöffnung und dem Vakuumanschluss herstellt. Insbesondere kann der Vakuumfilter in der mindestens einen Falte des mindestens einen kammerfreien Teils des Faltenbalgs angeordnet sein. Speziell wenn der mindestens eine kammerfreie Teil zwischen dem Teil des Faltenbalgs mit der Faltenbalgkammer und dem Saugfuß vorgesehen ist, wird unerwünschter Schmutz direkt nach dem Saugfuß aufgefangen. Dadurch kann der Schmutz den Teil des Faltenbalgs mit der Faltenbalgkammer nicht verschmutzen oder beschädigen. Zudem ist der Filter vergleichsweise einfach von außen durch die Saugöffnung erreichbar und zu reinigen.

Besonders bevorzugt ist der Vakuumfilter einstückig in den Vakuumsaugnapf integriert. Dadurch ist der Vakuumsaugnapf schnell, einfach und kostengünstig herstellbar. Außerdem kann sich der Vakuumfilter nicht unvorhergesehen verschieben oder lösen. Insofern werden die Zuverlässigkeit und die Betriebssicherheit des Vakuumsaugnapfs noch weiter erhöht.

Besonders bevorzugt ist der Vakuumfilter als Flächenfilter ausgeführt. Solch ein Flächenfilter ist vergleichsweise einfach in den Faltenbalg integrierbar, außerdem kostengünstig und wirksam.

In einer Weiterbildung der Erfindung weist der Vakuumsaugnapf mindestens zwei Faltenbalgkammern auf. Im Sinne dieser Druckschrift bedeutet "mehrere" "mindestens zwei". Die mindestens zwei Faltenbalgkammern können in einem Faltenbalg vorgesehen sein. Die Länge des Faltenbalgs in der Längsrichtung ist durch Änderung der Drücke in mindestens einer der Faltenbalgkammern variierbar. Dabei können die Drücke in den mindestens zwei Faltenbalgkammern jeweils gleich oder unterschiedlich sein.

Durch die Verwendung mehrerer Faltenbalgkammern lassen sich größere Änderungen der Länge des Faltenbalgs und damit der Länge des Vakuumsaugnapfs und/oder eine genauere Einstellung der gewünschten Position des Saugfußes realisieren. Wenn beispielsweise mehrere Faltenbalgkammern bezüglich der Längsrichtung in Reihe angeordnet sind, werden durch gleichzeitiges Aufblasen und Evakuieren jeweils beider Faltenbalgkammern eine besonders große Änderung der Länge des Faltenbalgs und ein besonders großer Hub des Saugfußes erreicht. Wenn beispielsweise mehrere Faltenbalgkammern eines Faltenbalgs nebeneinander angeordnet sind, dann wird auf diese Weise die Sicherheit des Saugnapfs erhöht. Wenn eine der Faltenbalgkammern plötzlich nicht mehr abdichtet, ist die Länge des Faltenbalges zumindest noch eingeschränkt durch die übrige(n) Faltenbalgkammer(n) steuerbar.

Der Vakuumsaugnapf kann auch mehrere Faltenbälge aufweisen. Dies ermöglicht ein besonders flexibles Greifen von Bauteilen, deren Oberfläche sich nicht plan-parallel zu dem Saugfuß erstreckt. Insbesondere kann die Form des Saugfußes und/oder die Neigung des Saugfußes relativ zu der Längsrichtung verändert werden, indem die Längen der verschiedenen Faltenbälge unabhängig voneinander variierbar sind.

Bevorzugt sind an dem Kopfende des Vakuumsaugnapfs Montagemittel zur Befestigung des Vakuumsaugnapfs an einer Halterung einer Vakuumsauganlage vorgesehen. Mit den Montagemitteln kann der Vakuumsaugnapf sicher an der Halterung befestigt werden. Besonders bevorzugt sind die Montagemittel dazu ausgestaltet, eine lösbare Befestigung des Vakuumrüssels an der Halterung zu ermöglichen. Die Montagemittel können beispielsweise derart ausgestaltet sein, dass der Vakuumsaugnapf mit Sicherungsringen an der Vakuumsauganlege befestigt werden kann.

Die Aufgabe der vorliegenden Erfindung besteht des Weiteren darin, eine Vakuumsauganlage mit einem einfacher aufgebauten und kompakten Vakuumsaugnapf mit aktiv ein- und ausfahrbarem Saugfuß zu schaffen.

Die genannte Aufgabe wird gelöst durch eine Vakuumsauganlage mit mindestens einem Vakuumsaugnapf nach einem der vorhergehenden Ansprüche und einer Ansteuervorrichtung zur Änderung eines Drucks in einer Faltenbalgkammer des Vakuumsaugnapfs sowie zur Beaufschlagung eines Vakuumanschlusses des Vakuumsaugnapfs mit einem Unterdruck, wobei die Ansteuervorrichtung über eine erste Fluidverbindung mit der Anschlussöffnung des Vakuumsaugnapfs verbunden ist und über eine zweite Fluidverbindung mit dem Vakuumanschluss verbunden ist.

Die Ansteuervorrichtung kann eine Druckeinheit zur Änderung des Drucks in der Faltenbalgkammer des Vakuumsaugnapfs und eine Vakuumeinheit zur Beaufschlagung des Vakuumanschlusses des Vakuumsaugnapfs mit einem Unterdruck aufweisen. In diesem Fall sind also eine separate Druckeinheit und eine separate Vakuumeinheit vorhanden. Dies erlaubt eine saubere Trennung der Funktionalitäten der beiden Einheiten.

Die oben genannten Ausführungsformen und Vorteile für den vorgeschlagenen Vakuumsaugnapf gelten entsprechend für die Vakuumsauganlage.

In einer bevorzugten Ausführungsform der Erfindung ist eine Matrixanordnung von mehreren erfindungsgemäßen Vakuumsaugnäpfen vorgesehen. Besonders bevorzugt weist die Matrixanordnung mindestens drei Vakuumsaugnäpfe auf, überaus bevorzugt mindestens vier Vakuumsaugnäpfe. Die Matrixanordnung erlaubt es, mindestens einen der Vakuumsaugnäpfe vor einem Kontakt mit einem scharfkantigen Werkstoff zu schützen, indem der Faltenbalg dieses Vakuumsaugnapfs bzw. die Faltenbälge dieser Vakuumsaugnäpfe gezielt verkürzt wird bzw. werden, bevor das Werkstück angesaugt wird. Die Vorteile liegen in einem geringeren Verschleiß der Vakuumsaugnäpfe und einem entsprechend verringerten Wartungsaufwand.

Bevorzugt weist die Vakuumsauganlage eine mit der Ansteuervorrichtung verbundene Steuereinheit zur Steuerung der Ansteuervorrichtung auf.

Bei der Steuereinheit kann es sich beispielsweise um eine Bedieneinheit und/oder einen Steuercomputer handeln. Die Steuereinheit kann dazu eingerichtet sein, die Vakuumsauganlage manuell, teilautomatisch und/oder automatisch zu steuern. Sie kann räumlich entfernt von der Ansteuervorrichtung angeordnet sein.

In einer Weiterbildung der Erfindung weist die Ansteuereinrichtung einen Präzisionsregler zur Änderung und Aufrechterhaltung des Drucks in der Faltenbalgkammer auf. Auf diese Weise kann der Druck in der Faltenbalgkammer geändert sowie auf einen bestimmten Wert eingestellt. Mit dem Präzisionsregler kann der eingestellte Druck zudem aufrechterhalten werden. Ein Ventil in der Faltenbalgkammer ist damit zur Aufrechterhaltung des eingestellten Drucks nicht erforderlich, so dass der Vakuumsaugnapf besonders einfach ausgeführt sein kann.

Die Aufgabe der Erfindung besteht ferner darin, ein Verfahren anzugeben, mit dem die Länge eines Vakuumsaugnapfs in einfacher Weise variiert werden kann.

Diese Aufgabe wird gelöst durch ein Verfahren zum Betreiben eines Vakuumsaugnapfs und/oder eine Vakuumsauganlage, wobei die Länge des Faltenbalgs in der Längsrichtung durch Änderung des Drucks in der Faltenbalgkammer variiert wird. Bei dem Vakuumsaugnapf und/oder der Vakuumsauganlage kann es sich insbesondere um einen zuvor beschriebenen Vakuumsaugnapf und/oder eine zuvor beschriebene Vakuumsauganlage handeln.

Bevorzugt erfolgt ein Wechsel zwischen der Grundstellung des Vakuumsaugnapfs, in welcher die Faltenbalgkammer nicht mit einem Unterdruck beaufschlagt ist, wobei die Länge des Faltenbalgs in der Längsrichtung in der Grundstellung maximal ist, und der Parkstellung, in welcher die Faltenbalgkammer mit einem Unterdruck beaufschlagt ist, wobei eine Länge eines Teils des Faltenbalgs entlang der Längsrichtung, in welchem die Faltenbalgkammer vorgesehen ist, in der Parkstellung minimal ist.

Die obigen Ausführungsformen und Vorteile gelten entsprechend für das vorgeschlagene Verfahren.

Die Aufgabe der Erfindung besteht des Weiteren darin, ein Verfahren anzugeben, mit dem auch schwere Werkstücke sicher bewegt und positioniert werden können, wenn ein Saugfuß des Vakuumsaugnapfs ausgefahren ist.

Die Aufgabe wird gelöst durch ein Verfahren zum Betreiben des Vakuumsaugnapfs und/oder einer Vakuumsauganlage, wobei eine Faltenbalgkammer des Vakuumsaugnapfs in einer Arbeitsstellung mit einem Überdruck beaufschlagt wird. Dieser Verfahrensschritt kann mit dem zuvor genannten Verfahren in allen dessen Ausführungen und mit allen dessen Vorteilen kombiniert werden. Bevorzugt beträgt dieser Überdruck maximal 1,4 bar. Bei dem Vakuumsaugnapf und/oder der Vakuumsaugnapf kann es sich insbesondere um einen zuvor beschriebenen Vakuumsaugnapf und/oder eine zuvor beschriebene Vakuumsauganlage handeln.

Durch die Beaufschlagung der Faltenbalgkammer mit dem Überdruck wird eine Form des Faltenbalgs stabilisiert. So können auch schwere Werkstücke zielsicher manipuliert werden.

Das Verfahren eignet sich insbesondere für einen Vakuumsaugnapf, der eine Grundstellung einnimmt, wenn die Faltenbalgkammer nicht mit einem Unterdruck beaufschlagt ist, wobei die Länge des Faltenbalgs in der Längsrichtung in der Grundstellung maximal ist. In der Arbeitsstellung wird die Faltenbalgkammer mit dem Überdruck beaufschlagt. Der Saugfuß bleibt ausgefahren und die Form des Faltenbalgs wird durch den in der Faltenbalgkammer Überdruck (zumindest im Bereich der Faltenbalgkammer) stabilisiert. Der Vakuumsaugnapf wird durch diese Stabilisierung insgesamt steifer. So können auch schwere Werkstücke mit dem Vakuumsaugnapf zuverlässig und genau angesaugt, gehalten und/oder bewegt werden.

Die Arbeitsstellung kann ferner zusätzlich dadurch definiert sein, dass ein Vakuumkanal des Vakuumsaugnapfs mit einem Ansaugdruck beaufschlagt ist. Die Arbeitsstellung dient zum Betrieb des Vakuumsaugnapfs mit einem anzusaugenden Werkstück.

Die Erfindung wird nachfolgend anhand von Ausführungsbeispielen und unter Bezugnahme auf die Figuren erläutert. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbezügen.

Es zeigen schematisch:
- Fig. 1: eine erste Ausführungsform eines erfindungsgemäßen Vakuumsaugnapfs in einer Grundstellung mit einem ausgefahrenen Saugfuß in einem Längsschnitt;
- Fig. 2: den Vakuumsaugnapf aus Fig. 1 in einer Parkstellung mit eingezogenem Saugfuß in einem Längsschnitt;
- Fig. 3: den Vakuumsaugnapf aus Fig. 1 in einer Arbeitsstellung mit einem an dem Saugfuß angesaugten Werkstück in einem Längsschnitt;
- Fig. 4: eine zweite Ausführungsform des erfindungsgemäßen Vakuumsaugnapfs mit einem zusätzlichen Flächenfilter in der Grundstellung in einem Längsschnitt;
- Fig. 5: eine erfindungsgemäße Ausführungsform einer Vakuumsauganlage mit dem Vakuumsaugnapf aus Fig. 4.

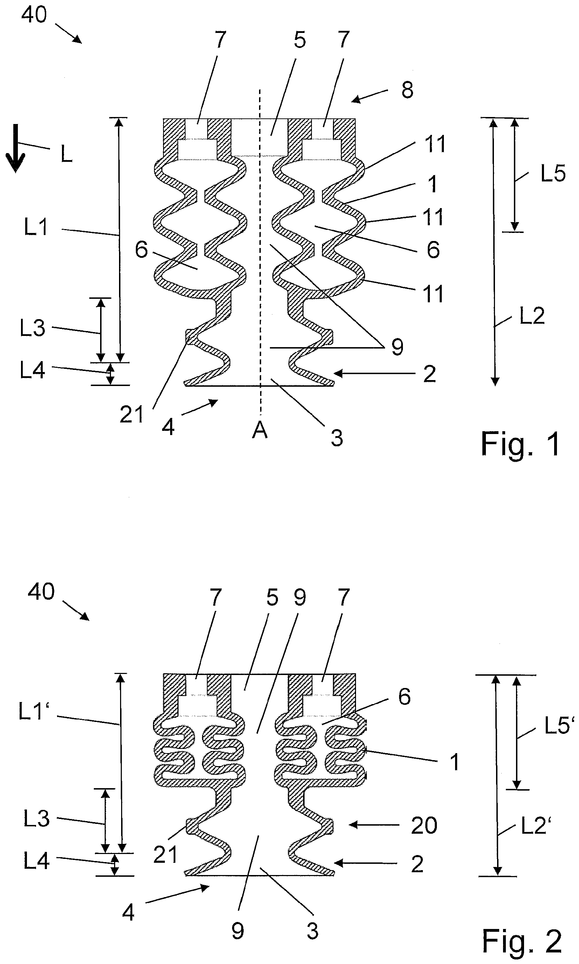

In Fig. 1 ist eine erste Ausführungsform eines erfindungsgemäßen Vakuumsaugnapfs (Vakuumsaugpad) 40 in einem Längsschnitt dargestellt. Ein Saugfuß 2 mit einer Saugöffnung 3 bildet entlang einer Längsrichtung L ein Fußende 4 des Vakuumsaugnapfs 40. Der Saugfuß 2 ist mit seinem dem Fußende 4 abgewandten Ende an einem Faltenbalg 1 angeordnet und integral mit diesem ausgebildet. Der gesamte Vakuumsaugnapf 40 ist einstückig geformt und durch Spritzguss hergestellt. Der Vakuumsaugnapf 40 kann in zwei Schritten hergestellt worden sein. Der Vakuumsaugnapf 40 ist bei der vorliegenden Ausführungsform in der Längsrichtung rotationsymmetrisch um eine Zentralachse A ausgebildet, die parallel zu der Längsrichtung L verläuft. Ein dem Fußende 4 in der Längsrichtung L abgewandtes Ende des Vakuumsaugnapfs wird als Kopfende 8 des Vakuumsaugnapfs 40 bezeichnet.

Der Faltenbalg 1 weist einen oberen Teil mit drei Falten 11 auf, in dem eine Faltenbalgkammer 6 angeordnet ist. Alternativ kann der obere Teil auch mehr oder weniger Falten 11 aufweisen, bevorzugt jedoch mindestens eine Falte 11, besonders bevorzugt mindestens zwei Falten 11. In der Längsrichtung L gesehen ist zwischen dem oberen Teil und dem Saugfuß 2 ein kammerfreier Teil 20 des Faltenbalgs 1 mit einer Falte 21 angeordnet (siehe Fig. 2). Die Faltenbalgkammer 6 erstreckt sich in der Längsrichtung L gesehen nicht in den kammerfreien Teil 20 hinein. In alternativen Ausführungsformen können auch keine Falten oder mindestens zwei Falten in dem kammerfreien Teil vorgesehen sein (nicht gezeigt).

In einem innen liegenden Zentralbereich des Vakuumsaugnapfs 40 erstreckt sich entlang der Zentralachse A ein Vakuumkanal 9, dessen dem Fußende 4 zugewandtes Ende in der Längsrichtung L durch die Saugöffnung 3 gebildet wird. Ein kopfseitiges Ende des Vakuumkanals 9 wird durch einen Vakuumanschluss 5 gebildet, der radial mittig an dem Kopfende 8 des Vakuumsaugnapfs 40 vorgesehen ist. Über den Vakuumkanal 9 steht die Saugöffnung 3 mit dem Vakuumanschluss 5 in Fluidverbindung.

Der Faltenbalg 1 begrenzt in einer radialen Richtung senkrecht zu der Längsrichtung L den Vakuumkanal 9. Die Faltenbalgkammer 6 ist in dem oberen Teil des Faltenbalgs 1 innerhalb des Faltenbalgs 1 und konzentrisch um den Vakuumkanal 9 angeordnet. Sie verläuft im Wesentlichen ringförmig um den Vakuumkanal 9 und ist von diesem durch eine den Vakuumkanal 9 begrenzende Innenwand des Faltenbalgs 1 abgetrennt. Die Faltenbalgkammer 6 wird in der radialen Richtung nach außen durch eine Außenwand des Faltenbalgs 1 abgeschlossen. In dem kammerfreien Teil 20 weist der Faltenbalg 1 dagegen nur eine Wand auf.

An dem Kopfende 8 ist außerdem eine ringförmige Anschlussöffnung 7 ausgebildet, die in Fluidverbindung mit der Faltenbalgkammer 6 steht. Abgesehen von der Anschlussöffnung 7 ist die Faltenbalgkammer 6 druckdicht abgeschlossen. Über die Anschlussöffnung 7 kann der Faltenbalgkammer 6 ein Fluid zugeführt werden. Außerdem kann über die Anschlussöffnung 7 Fluid aus der Faltenbalgkammer abgelassen und/oder herausgepumpt werden.

Als Fluid eignen sich insbesondere Luft oder Stickstoff. Die Faltenbalgkammer 6 kann also über die Anschlussöffnung 7 aufgeblasen werden oder evakuiert werden.

In Fig. 1 befindet sich der Vakuumsaugnapf 40 in einer Grundstellung. In der Faltenbalgkammer 6 herrscht der gleiche Druck wie ein Umgebungsdruck, der von außen auf den Vakuumsaugnapf 40 wirkt. In dem Vakuumkanal 9 und in der Saugöffnung 3 herrscht ebenfalls der Umgebungsdruck. Eine Länge L1 des Faltenbalgs 1 und eine Länge L2 des Vakuumsaugnapfs 40 entlang der Längsrichtung L sind in der Grundstellung jeweils maximal. Die Länge L2 des Vakuumsaugnapfs ergibt sich durch die Addition der Länge L1 des Faltenbalgs und einer Länge L4 des Saugfußes 3 entlang der Längsrichtung L.

In Fig. 2 befindet sich der Vakuumsaugnapf 40 in einer Parkstellung. In der Faltenbalgkammer 6 herrscht ein Unterdruck, der kleiner als der Umgebungsdruck ist. Dadurch werden die drei Falten 11 des oberen Teils des Faltenbalgs 1 in der Längsrichtung L zusammengedrückt. In der Parkstellung ist die Länge L1' des Faltenbalgs 1 geringer als in der Grundstellung. Insbesondere ist eine Länge L5' des oberen Teils in der Längsrichtung L in der Parkstellung minimal. Entsprechend ist die Länge L5' des oberen Teils in Fig. 2 kürzer als die Länge L5 des oberen Teils in Fig. 1.

Wenn ausgehend von der in Fig. 2 gezeigten Parkstellung der Unterdruck in der Faltenbalgkammer 6 abgebaut wird, dann nimmt der obere Teil aufgrund der elastischen Eigenschaften des Faltenbalgs 1 von selbst wieder seine ursprüngliche (Grund-)Länge L5 an, wie sie in Fig. 1 gezeigt ist.

Durch Beaufschlagung der Faltenbalgkammer 6 mit einem Überdruck, der größer ist als der Umgebungsdruck, kann die Verlängerung des oberen Teils hin zu der Länge L5 aktiv beschleunigt werden und auch dann erreicht werden, wenn eine elastische Rückstellkraft des oberen Teils alleine nicht genügt, eine ihr entgegen wirkende äußere Kraft - beispielsweise durch ein auf den Saugfuß drückendes Werkstück - zu überwinden.

Zusammengefasst lässt sich die Länge L2, L2', L2" des Faltenbalgs 1 durch Ändern des Drucks in der Faltenbalgkammer 6 variieren.

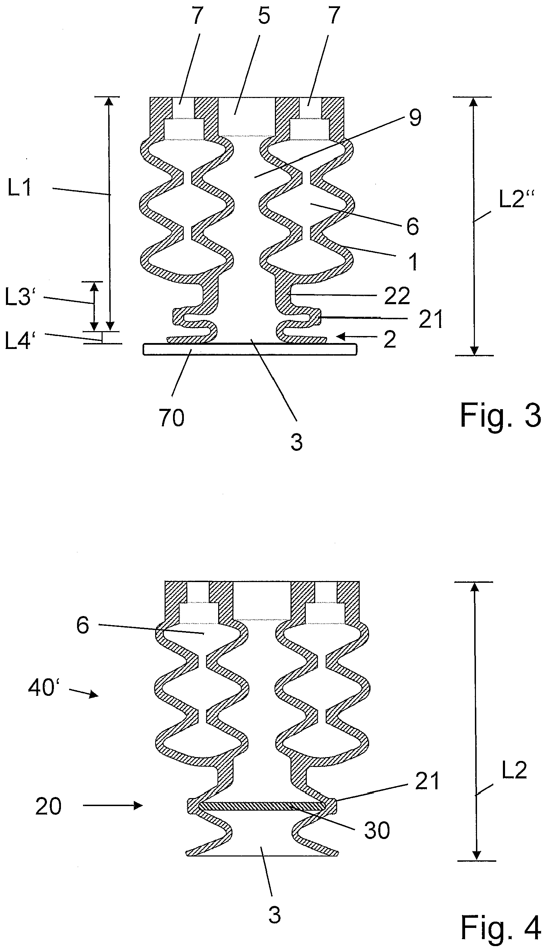

Über den Vakuumanschluss 5 und den Vakuumkanal 9 kann die Saugöffnung 3 mit einem Ansaugdruck beaufschlagt werden. Dabei handelt es sich um einen Unterdruck, der geringer ist als der Umgebungsdruck. Durch den Ansaugdruck kann ein Werkstück 70 an den Saugfuß 2 angesaugt und an ihm gehalten werden. Dies ist in Fig. 3 dargestellt. Wenn der Saugfuß 2 auf eine Oberfläche des Werkstücks 70 aufgesetzt wird, schließt der Saugfuß 2 die Saugöffnung 3 zumindest im Wesentlichen dichtend nach außen ab, insbesondere gegen den Umgebungsdruck. Aufgrund einer Druckdifferenz zwischen dem Ansaugdruck und dem Umgebungsdruck wird das Werkstück 70 an den Saugfuß 2 gedrückt. Der Saugfuß 2 ist in der Arbeitsstellung ausgefahren.

Da in der Arbeitsstellung in Fig. 3 ein Unterdruck in dem Vakuumkanal 9 herrscht, wird die Falte 21 in der Längsrichtung L zusammengedrückt. Daher verringert sich eine Länge L3' des kammerfreien Teils 21 gegenüber seiner Länge L3 in der Grundstellung in Fig. 1 und in der Parkstellung in Fig. 2. Da das Werkstück 70 entgegen der Längsrichtung L auf den Saugfuß 2 drückt, verringert sich auch dessen Länge L4' gegenüber seiner Länge L4 in der Grundstellung und in der Parkstellung. Entsprechend ist die Länge L2" des Vakuumsaugnapfs 40 in der Arbeitsstellung etwas geringer als seine Länge L2 in der Grundstellung. Zugleich ist sie größer als seine Länge L2' in der Parkstellung.

In der Arbeitsstellung wird die Faltenbalgkammer 6 mit einem Überdruck beaufschlagt. Dadurch ist der obere Teil des Faltenbalgs 1 von innen stabilisiert. Insbesondere wird ein Einknicken des oberen Teils vermieden. Die Länge L1 des oberen Teils in der Arbeitsposition entspricht seiner Länge L1 in der Grundstellung.

In der Arbeitsstellung liegt der Saugfuß 2 an der zusammengedrückten Falte 21 an (siehe Fig. 3). Die dadurch verursachte große, ringförmige Anlagefläche sorgt für eine Stabilisierung des Saugfußes 2 an dem Faltenbalg 1. Das ist besonders dann vorteilhaft, wenn eine Querbeschleunigung auf das Werkstück 70 aufgebracht wird. Außerdem ist ein Bereich des Faltenbalgs 1 zwischen dem oberen Teil und der Falte 21 mit einer verstärken Wand 22 ausgeführt. Dadurch ist auch der kammerfreie Teil 20 des Faltenbalgs 1 in der Arbeitsstellung sehr steif, so dass das Werkstück 70 sicher und zielgenau aufgenommen, bewegt, positioniert und/oder abgelegt werden kann.

Ausgehend von der in Fig. 3 gezeigten Arbeitsstellung kann die Faltenbalgkammer 6 mit einem Unterdruck beaufschlagt werden. Dadurch wird der Saugfuß 2 durch Verkürzung des oberen Teils des Faltenbalgs 1 (ähnlich wie bei der Parkstellung in Fig. 2) eingefahren. Wenn der Ansaugdruck im Vakuumkanal 9 und an der Saugöffnung 3 aufrechterhalten bleibt, wird das Werkstück 70 weiter an dem Saugfuß 2 gehalten und zusammen mit dem Saugfuß 2 bewegt, beispielsweise angehoben. Wenn danach der Druck in der Faltenbalgkammer 6 wieder erhöht wird, fährt der Saugfuß 2 mitsamt dem Werkstück 70 wieder aus. Andererseits könnte alternativ bei eingefahrenem Saugfuß 2 die Saugöffnung 3 nicht weiter mit dem Ansaugdruck beaufschlagt werden. In diesem Fall wird das Werkstück 70 bei eingefahrenem Saugfuß 2 abgelegt und/oder abgeworfen.

Zwischen der Faltenbalgkammer 6 und der Saugöffnung 3 besteht bei bestimmungsgemäßer Verwendung des Vakuumsaugnapfs 40 keine Fluidverbindung. Der Ansaugdruck und der Druck in der Faltenbalgkammer 6 sind unabhängig voneinander einstellbar. Entsprechend lassen sich mit dem Vakuumsaugnapf 40 verschiedene Stellungen und Zustände realisieren, unter anderem die in Fig. 1 gezeigte Grundposition, die Parkposition in Fig. 2 sowie die Arbeitsstellung in Fig. 3.

In Fig. 4 ist eine zweite Ausführungsform des erfindungsgemäßen Vakuumsaugnapfs 40' gezeigt. Bei dieser Ausführungsform ist ein Vakuumfilter in dem Vakuumkanal 9 vorgesehen, der als Flächenfilter 30 ausgeführt ist. Ansonsten entspricht die zweite Ausführungsform der ersten Ausführungsform und es werden gleiche Bezugszeichen verwendet.

Der Flächenfilter 30 ist in der Längsrichtung L gesehen in der Mitte der Falte 21 des kammerfreien Teils 20 vorgesehen. Die Anordnung des Flächenfilters 30 an dieser Stelle ist vorteilhaft, weil sie die größtmögliche Oberfläche des Flächenfilters 30 ermöglicht. Das sorgt für eine besonders lange Lebensdauer des Flächenfilters 30. Auch bei großer Schmutzbelastung dauert es vergleichsweise lange, bis der Flächenfilter 30 verstopft. Außerdem stabilisiert der Flächenfilter 30 bei dieser Anordnung die Form des Vakuumsaugnapfs 40. Der Flächenfilter 30 verhindert, dass Schmutz von der Saugöffnung 3 zu dem Vakuumanschluss 5 gelangen kann. Insbesondere kann kein Schmutz von der Saugöffnung 3 in den über ihm liegenden Teil des Vakuumkanals 9 gelangen. Der Flächenfilter 30 kann aus einem flächigen Element - beispielsweise einer Scheibe - aus gesintertem Kunststoff ausgebildet sein. Auf diese Weise wird der Flächenfilter 30 mit einem besonders genau reproduzierbaren Filtrationsgrad hergestellt.

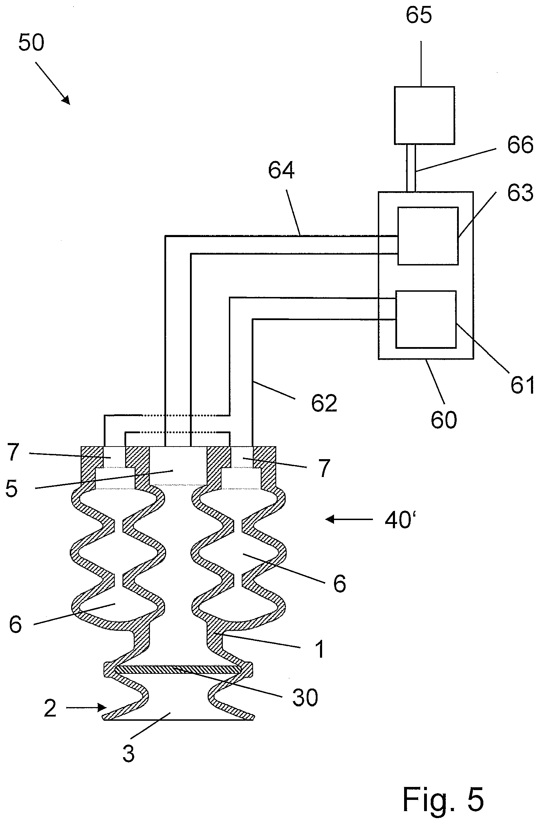

Fig. 5 stellt eine Vakuumsauganlage 50 mit dem in Fig. 4 gezeigten Vakuumsaugnapf 40' dar. In gleicher Weise kann der Vakuumsaugnapf 40 aus Fig. 1 in der Vakuumsauganlage 50 verwendet werden (nicht gezeigt). Der Vakuumsaugnapf 40' wird durch eine Ansteuervorrichtung 60 betrieben.

Die Anschlussöffnung 7 des Vakuumsaugnapfs 40 ist über eine erste Fluidleitung 62 an eine Druckeinheit 61 der Ansteuervorrichtung 60 angeschlossen. Mittels der Druckeinheit 61 wird der Druck in der Faltenbalgkammer 6 geändert. Dazu kann die Druckeinheit 61 der Faltenbalgkammer 6 über die erste Fluidleitung 62 und die Anschlussöffnung 7 Druckluft zuführen und so die Faltenbalgkammer 6 aufblasen. Außerdem ist die Druckeinheit 61 in der Lage, über die erste Fluidleitung 62 und die Anschlussöffnung 7 Luft aus der Faltenbalgkammer 6 herauszulassen und/oder aus der Faltenbalgkammer 6 herauszupumpen, also die Faltenbalgkammer 6 zu evakuieren.

Ferner ist der Vakuumanschluss 5 des Vakuumsaugnapfs 40 über eine zweite Fluidleitung 64 an eine Vakuumeinheit 63 der Ansteuervorrichtung 60 angeschlossen. Mittels der Vakuumeinheit 63 wird die Saugöffnung 3 mit dem Ansaugdruck beaufschlagt. Dafür evakuiert die Vakuumeinheit 63 die zweite Vakuumleitung 64, den Vakuumanschluss 5, den Vakuumkanal 9 und die Saugöffnung 3.

Da die Anschlussöffnung 7 an die erste Fluidleitung 62 und der Vakuumanschluss 5 an die zweite Fluidleitung 64 angeschlossen sind, besteht keine Fluidverbindung zwischen der Faltenbalgkammer 6 und der Saugöffnung 3 andererseits über die Umgebung. Der Ansaugdruck in der Saugöffnung 3 und der Druck in der Faltenbalgkammer 6 sind unabhängig voneinander durch die Ansteuervorrichtung 60 einstellbar.

Die Ansteuervorrichtung 60 ist über eine elektrische Verbindung 66 mit einer Steuereinheit 65 verbunden. Statt der elektrischen Verbindung 66 können beispielsweise auch eine Datenverbindung, eine Bus-Verbindung und/oder eine drahtlose Verbindung vorgesehen sein. Mittels der Steuereinheit 65 wird die Ansteuervorrichtung 60 automatisch und/oder manuell gesteuert. Bei der vorliegenden Ausführungsform ist beispielsweise ein Steuerrechner als Steuereinheit 65 vorgesehen.

Bei den vorgeschlagenen Vakuumsaugnapf 40, 40' kann der Saugfuß (3) in einfacher und zuverlässiger Weise ein- und ausfahren werden. Darüber hinaus sind sie besonders kompakt und leicht. Des Weiteren sind sie schnell und kostengünstig herstellbar. Da der Faltenbalg 1 zugleich auch zur Änderung der Länge L2, L2', L2" dient, ist in vorteilhafter Weise keine zusätzliche, verschleißanfällige mechanische Führungen vorgesehen. Die Vakuumsaugnapf 40, 40' sind besonders zuverlässig und können einfach als Ganzes ausgetauscht werden.

### Bezugszeichenliste:

- 1: Faltenbalg
- 2: Saugfuß
- 3: Saugöffnung
- 4: Fußende
- 5: Vakuumanschluss
- 6: Faltenbalgkammer
- 7: Anschlussöffnung
- 8: Kopfende
- 9: Vakuumkanal
- 11: Falte
- 20: kammerfreier Teil
- 21: Falte
- 22: verstärkte Wand
- A: Zentralachse
- 60: Ansteuervorrichtung
- 61: Druckeinheit
- 62: erste Fluidverbindung
- 63: Vakuumeinheit
- 64: zweite Fluidverbindung
- 65: Steuereinheit
- 66: elektrische Verbindung
- 70: Werkstück
- L1, L1': Länge (des Faltenbalgs)
- L2, L2', L2": Länge (des Vakuumsaugnapfs)
- L3: Länge (des kammerfreien Teils)
- L4, L4': Länge (des Saugfußes)
- L5, L5': Länge (des oberen Teils)

## Patentansprüche

1. Vakuumsaugnapf (40, 40') mit
einem Faltenbalg (1) und
einem an dem Faltenbalg (1) angebrachten Saugfuß (2) mit einer Saugöffnung (3), der entlang einer Längsrichtung (L) ein Fußende (4) des Vakuumsaugnapfs (40, 40') bildet, und
einem Vakuumanschluss (5), der in Fluidverbindung mit der Saugöffnung (3) steht,
**dadurch gekennzeichnet, dass** der Faltenbalg (1) eine Faltenbalgkammer (6) aufweist, wobei eine Länge (L1) des Faltenbalgs (1) in der Längsrichtung (L) durch Änderung eines Drucks in der Faltenbalgkammer (6) variierbar ist.

2. Vakuumsaugnapf (40, 40') nach Anspruch 1, **gekennzeichnet durch** eine Anschlussöffnung (7), die in Fluidverbindung mit der Faltenbalgkammer (6) steht und **durch** welche die Faltenbalgkammer (6) mit Überdruck und/oder Unterdruck beaufschlagbar ist.

3. Vakuumsaugnapf (40, 40') nach einem der vorhergehenden Ansprüche,
**dadurch gekennzeichnet, dass** der Vakuumsaugnapf (40, 40') einstückig ausgeführt ist.

4. Vakuumsaugnapf nach einem der vorhergehenden Ansprüche, **dadurch gekennzeichnet, dass** der Vakuumsaugnapf (40, 40') eine Grundstellung einnimmt, wenn die Faltenbalgkammer (6) nicht mit einem Unterdruck beaufschlagt ist, wobei die Länge (L1) des Faltenbalgs (1) in der Längsrichtung (L) in der Grundstellung maximal ist.

5. Vakuumsaugnapf (40, 40') Anspruch 4, **dadurch gekennzeichnet, dass** der Vakuumsaugnapf (40, 40') eine Parkstellung einnimmt, wenn die Faltenbalgkammer (6) mit einem Unterdruck beaufschlagt ist, wobei die Länge (L1') des Faltenbalgs (1) in der Längsrichtung (L) in der Parkstellung kleiner ist als die Länge (L1) des Faltenbalgs (1) in der Längsrichtung (L) in der Grundstellung.

6. Vakuumsaugnapf (40, 40') nach einem der vorhergehenden Ansprüche,
**dadurch gekennzeichnet, dass** der Faltenbalg (1) quer zu der Längsrichtung (L) einen Vakuumkanal (9) umschließt, welcher sich zumindest im Wesentlichen entlang der Längsrichtung (L) erstreckt und über welchen die Saugöffnung (3) und der Vakuumanschluss (5) in Fluidverbindung stehen, wobei die Saugöffnung (3) in der Längsrichtung (L) ein fußseitiges Ende des Vakuumkanals (9) bildet.

7. Vakuumsaugnapf (40, 40') nach einem der vorhergehenden Ansprüche,
**dadurch gekennzeichnet, dass** sich eine Länge (L2, L2', L2") des Vakuumsaugnapfs in der Längsrichtung (L) durch eine Beaufschlagung des Vakuumkanals (9) mit einem Ansaugdruck verkürzen lässt.

8. Vakuumsaugnapf (40, 40') nach Anspruch 7, **dadurch gekennzeichnet, dass** der Faltenbalg (1) entlang der Längsrichtung (L) mindestens einen kammerfreien Teil (20) mit mindestens einer Falte (21) aufweist.

9. Vakuumsaugnapf (40, 40') nach einem der vorhergehenden Ansprüche, **gekennzeichnet durch** einen Vakuumfilter zwischen dem Vakuumanschluss (5) und der Saugöffnung (3).

10. Vakuumsaugnapf nach einem der vorhergehenden Ansprüche, **gekennzeichnet durch** mindestens zwei Faltenbalgkammern (6).

11. Vakuumsaugnapf nach Anspruch 10, **gekennzeichnet durch** mindestens zwei Faltenbälge.

12. Vakuumsaugnapf nach einem der vorhergehenden Ansprüche, **dadurch gekennzeichnet, dass** an dem Kopfende (8) des Vakuumsaugnapfs Montagemittel zur Befestigung des Vakuumsaugnapfs (40, 40') an einer Halterung einer Vakuumsauganlage vorgesehen sind.

13. Vakuumsauganlage (50) mit
mindestens einem Vakuumsaugnapf (40, 40') nach einem der vorhergehenden Ansprüche und
einer Ansteuervorrichtung (60) zur Änderung eines Drucks in einer Faltenbalgkammer (6) des Vakuumsaugnapfs (40, 40') sowie zur Beaufschlagung eines Vakuumanschlusses (5) des Vakuumsaugnapfs (40, 40') mit einem Ansaugdruck, wobei die Ansteuervorrichtung (60) über eine erste Fluidverbindung (62) mit dem Ansauganschluss (7) des Vakuumsaugnapfs (40, 40') verbunden ist und über eine zweite Fluidverbindung (64) mit dem Vakuumanschluss (5) verbunden ist.

14. Vakuumsauganlage (50) nach Anspruch 13, **dadurch gekennzeichnet,**
**dass** die Vakuumsauganlage (50) eine mit der Ansteuervorrichtung (60) verbundene Steuereinheit (65) zur Steuerung der Ansteuervorrichtung (60) aufweist und/oder
**dass** die Ansteuereinrichtung (60) einen Präzisionsregler zur Änderung und Aufrechterhaltung des Drucks in der Faltenbalgkammer (6) aufweist.

15. Verfahren zum Betreiben eines Vakuumsaugnapfs gemäß einem der Ansprüche 1 bis 12 und/oder einer Vakuumsauganlage nach einem der Ansprüche 13 oder 14, **dadurch gekennzeichnet, dass** eine Faltenbalgkammer des Vakuumsaugnapfs in einer Arbeitsstellung mit einem Überdruck beaufschlagt wird.
